# FASCICULE DE BREVET EUROPEEN

(11) **EP 1 635 026 B1**
(45) Date de publication et mention de la délivrance du brevet: **10.10.2007**
(21) Numéro de dépôt: 05291806.7
(22) Date de dépôt: 30.08.2005
(51) Int. Cl.: E05F 1/10

(54) **Dispositif de rappel et de maintien d'une porte arrière de véhicule automobile comportant deux ouvrants**
Rückstell- und halterungsvorrichtung einer Heckklappe eines Kraftfahrzeuges mit zwei Flügeln
Return and support device of a rear door of a vehicle having two wings

(30) Priorité: 14.09.2004 FR 0409743
(43) Date de publication de la demande: 15.03.2006
(73) Titulaire: Peugeot Citroën Automobiles S.A., 78140 Vélizy Villacoublay (FR)
(72) Inventeur: Betourne, Muriel, 28410 Bû (FR); Jeuffe, Gérard, 78810 Feucherolles (FR)
(74) Mandataire: Lanceplaine, Jean-Claude

(56) Documents cités:
- DE-A1- 19 615 540
- FR-A- 2 782 974
- US-A1- 2003 111 861

## Description

L'invention concerne un véhicule automobile comprenant une carrosserie munie d'un pavillon et d'une porte arrière comportant un premier et un second ouvrant, mobiles par pivotement autour d'un axe horizontal au niveau du pavillon et équipée d'un dispositif de rappel et de maintien, comme décrit dans le document US 2003/111861.

Dans la conception des véhicules automobiles, en particulier de type break, on cherche généralement à disposer, à l'arrière du véhicule, d'une ouverture de grandes dimensions pour pouvoir assurer le chargement d'objets encombrants dans le coffre et/ou la partie arrière de l'habitacle du véhicule automobile.

La porte arrière de tels véhicules automobiles est généralement constituée par un hayon en tôle monté pivotant sur la carrosserie autour d'un axe de direction transversale qui peut être situé au niveau de la partie supérieure de la carrosserie appelée pavillon. Le hayon en tôle comporte généralement une ouverture pour une vitre arrière du véhicule automobile.

Il peut être avantageux de prévoir une vitre arrière qui puisse être ouverte indépendamment de l'ouverture de l'ensemble du hayon. Dans ce cas, le hayon peut constituer un premier ouvrant de la porte arrière et la vitre, un second ouvrant.

En position de fermeture, le hayon est rabattu contre une ouverture arrière de la carrosserie du véhicule automobile et le second ouvrant comportant la vitre peut être monté articulé autour d'un axe transversal, pour pouvoir être déplacé entre une position rabattue sur le hayon et une position levée d'ouverture.

Les hayons de véhicule automobile et plus généralement les ouvrants montés basculants autour d'un axe horizontal de direction transversale du véhicule automobile doivent être rappelés et maintenus en position d'ouverture, de manière à faciliter leur ouverture et leur maintien en position ouverte, pour permettre à un utilisateur d'accéder à la partie arrière du véhicule automobile.

Dans le cas d'une porte arrière comportant un premier ouvrant et un second ouvrant qui peut être manoeuvré à l'ouverture indépendamment du premier ouvrant, il est nécessaire de prévoir un dispositif comportant des moyens de rappel et de maintien qui doivent permettre de déplacer indépendamment ou simultanément entre les positions de fermeture et d'ouverture des ouvrants, sans risque d'interférence et qui doivent être réalisés de manière à pouvoir être logés facilement dans la carrosserie du véhicule automobile, en dessous des ouvrants.

Les moyens de rappel et de maintien des portes arrière des véhicules automobiles telles que les hayons articulés autour d'un axe horizontal transversal sont généralement constitués par des vérins à gaz, par exemple des vérins à air, disposés dans des parties latérales de la carrosserie du véhicule automobile et qui comportent un corps de vérin monté articulé sur la carrosserie et une tige de vérin montée coulissante dans le corps de vérin reliée de manière articulée à l'ouvrant.

Le but de l'invention est de proposer un véhicule automobile comprenant une carrosserie munie d'un pavillon et d'une porte arrière de véhicule automobile comportant un premier et un second ouvrants mobiles par pivotement autour d'un axe horizontal transversal au niveau du pavillon et équipée d'un dispositif de rappel et de maintien , le premier ouvrant étant mobile entre une position d'ouverture et une position de fermeture d'une ouverture arrière de la carrosserie du véhicule automobile et le second ouvrant entre une position rabattue sur le premier ouvrant et une position ouverte éloignée du premier ouvrant, ce dispositif assurant un fonctionnement parfait de la porte arrière et du second ouvrant à l'ouverture et à la fermeture, sans risque d'interférence entre des pièces en mouvement et pouvant être logé facilement dans des parties de la carrosserie du véhicule automobile sous les ouvrants en position de fermeture.

Dans ce but, le dispositif comporte, sur chacun des côtés latéraux du véhicule automobile, un premier et un second vérins à gaz, le premier vérin étant monté articulé par une partie de corps de premier vérin sur la carrosserie du véhicule automobile et par une partie de tige de premier vérin montée mobile par coulissement dans le corps du premier vérin, sur une partie latérale du premier ouvrant, le second vérin à gaz étant monté articulé par une partie de corps de second vérin sur la carrosserie du véhicule automobile, dans une position décalée latéralement dans la direction transversale du véhicule automobile par rapport à la position d'articulation du corps de premier vérin sur la carrosserie et par une partie de tige de second vérin sur une partie latérale du second ouvrant, de manière que les axes longitudinaux d'actionnement du premier et du second vérins se déplacent en rotation au cours du déplacement des ouvrants, dans un premier et dans un second plans sensiblement longitudinaux du véhicule automobile ayant une disposition angulaire l'un par rapport à l'autre, l'un au moins du premier et du second vérins étant disposé dans un logement ménagé dans un côté latéral de la carrosserie du véhicule automobile, dans une position repliée.

Selon des modalités plus particulières qui seront prises isolément ou en combinaison :
- le premier et in second vérins comportent chacun un corps de vérin monté articulé par l'intermédiaire d'une rotule sphérique respective sur la carrosserie du véhicule automobile, et une tige de vérin montée articulée par l'intermédiaire d'une articulation sphérique, respectivement sur une partie latérale du premier ouvrant et une partie latérale du second ouvrant.
- la première rotule de fixation du premier vérin et la seconde rotule de fixation du second vérin d'une paire de vérins disposée sur un côté latéral de la carrosserie du véhicule automobile sont montées en saillie dans la direction transversale vers l'intérieur sur un rebord latéral de la carrosserie du véhicule automobile, la rotule de montage du corps du premier vérin dont la tige est reliée au premier ouvrant étant en saillie dans la direction transversale vers l'intérieur du véhicule sur une longueur plus grande que la seconde rotule de montage articulé du second vérin dont la tige est reliée au second ouvrant.
- la tige du premier vérin et la tige du second vérin sont reliées, respectivement, au premier ouvrant et au second ouvrant dans des positions telles qu'en position repliée de fermeture, le second vérin se trouve au-dessus du premier vérin.
- chacun des premiers vérins et des seconds vérins du dispositif est disposé dans la position déployée d'ouverture du premier ouvrant et du second ouvrant de manière angulaire par rapport à une direction verticale, la direction axiale d'actionnement du premier vérin et la direction axiale d'actionnement du second vérin de chaque paire de vérins étant inclinées en sens inverse par rapport à la direction verticale.

Afin de bien faire comprendre l'invention, on va décrire à titre d'exemple, en se référant aux figures jointes en annexe, un dispositif suivant l'invention utilisé pour assurer le rappel et le maintien des ouvrants d'une porte arrière de break d'un type nouveau.

La figure 1 est une vue en élévation avec arrachement de la partie arrière du break, la porte arrière étant dans une position fermée.

La figure 2 est une vue de la partie arrière du break, la porte arrière étant dans une position ouverte.

La figure 3 est une vue en perspective de trois-quarts de la partie arrière du véhicule automobile, le premier ouvrant ou hayon étant en position fermée et le second ouvrant en position ouverte.

La figure 4 est une vue en perspective de dessus de deux vérins du dispositif de rappel et de maintien disposés d'un côté latéral de la porte arrière.

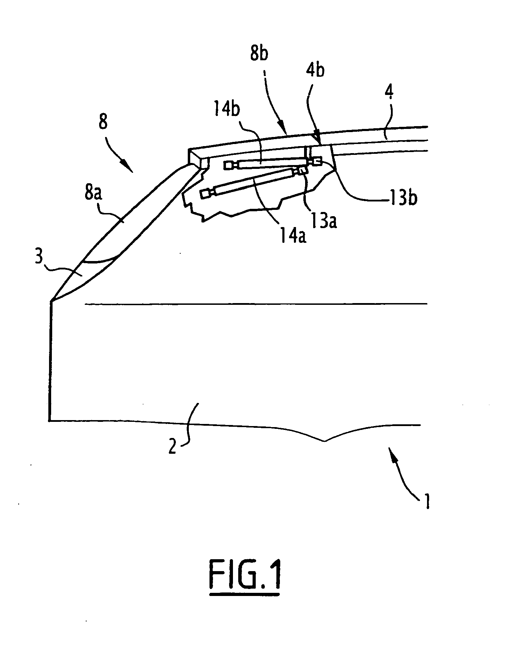

Sur les figures 1, 2 et 3, on a représenté la partie arrière de la carrosserie 2 du véhicule 1 de type break qui comporte une partie fixe constituée elle-même de deux parties latérales constituant les ailes arrière du véhicule automobile et une partie supérieure 4 peu inclinée par rapport au plan horizontal constituant le toit ou pavillon du véhicule automobile.

La carrosserie du véhicule automobile comporte également une porte arrière 3 montée basculante autour d'un axe 5 horizontal de direction transversale situé au niveau d'une partie du pavillon 4.

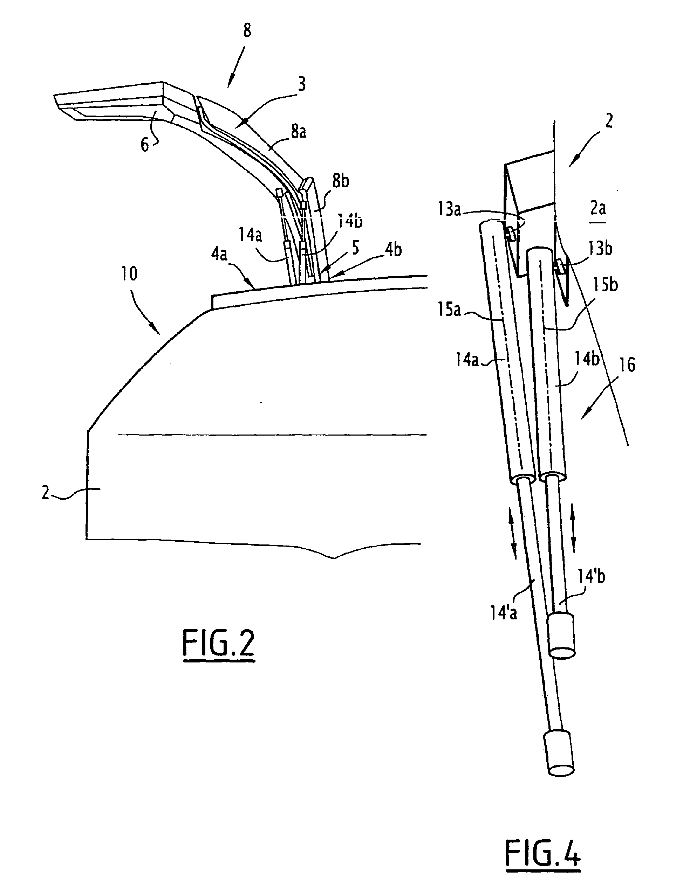

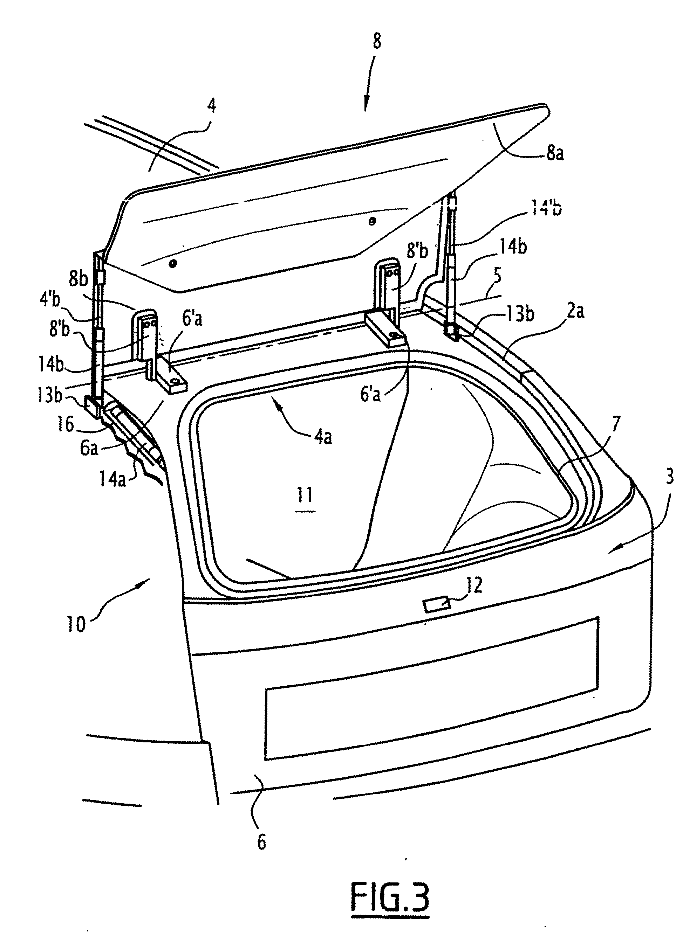

Comme il est visible en particulier sur la figure 3, la porte arrière 3 du véhicule automobile réalisée suivant l'invention comporte un premier ouvrant 6 constitué par un hayon en tôle comportant une ouverture de vitre arrière 7 et un second ouvrant 8 comportant en particulier la vitre arrière 8a destinée à venir recouvrir l'ouverture de vitre arrière 7 en position de fermeture telle que représentée sur les figures 1 et 2.

Comme représenté en particulier sur la figure 2, une ouverture arrière 10 de la carrosserie 2 du véhicule automobile s'étend entre le plancher de l'habitacle et le pavillon et suivant une partie arrière 4a du pavillon 4 qui présente un bord 4b délimitant l'ouverture 10 vers l'avant du véhicule automobile. L'axe de pivotement 5 de la porte arrière 3 est situé au voisinage du bord 4b de la partie arrière 4a du pavillon 4 de manière que, dans la position d'ouverture de la porte arrière 3, comme représenté sur la figure 2, l'ouverture 10 soit totalement dégagée et assure un très bon accès au coffre et à l'habitacle 11 du véhicule automobile.

Comme il est visible sur la figure 3, le hayon en tôle 6 comporte, au-dessus de l'ouverture de vitre arrière 7, une partie en tôle 6a destinée à recouvrir en position de fermeture du hayon 6 (tel que représenté sur la figure 3) la partie arrière 4a du pavillon 4.

Le second ouvrant 8 comporte une partie en tôle 8b sur laquelle est fixée la vitre 8a suivant un côté de la partie en tôle 8b de direction transversale. Le second ouvrant 8 est monté pivotant autour de l'axe 5 par l'intermédiaire de la partie en tôle 8b. Le hayon en tôle 6 comporte deux charnières 6'a fixées, par exemple par soudure, sur sa partie 6a qui sont engagées sur des tourillons fixés sur la carrosserie 2 et alignés suivant l'axe de pivotement 5.

Le second ouvrant 8 comporte des charnières 8'b fixées sur sa partie en tôle 8b, par exemple par soudure, qui sont engagées sur des tourillons fixés sur la carrosserie 2 et également alignés suivant l'axe 5. De cette manière, les deux ouvrants sont montés pivotants sur un même axe 5, lui-même situé au voisinage ou légèrement à l'avant du bord antérieur 4b de la partie arrière 4a du pavillon délimitant l'ouverture arrière 10 du véhicule automobile qui peut être ainsi totalement dégagée par ouverture de l'ensemble de la porte arrière. En position de fermeture complète du véhicule automobile telle que représentée sur la figure 1, ou en position d'ouverture de la porte arrière dans son ensemble, comme représenté sur la figure 2, le second ouvrant 8 est rendu solidaire du hayon 6 par un élément de verrouillage 12 qui comporte une serrure de verrouillage et un bouton de commande manuel.

Dans la position rabattue et fermée du second ouvrant sur le premier ouvrant, la partie 8b en tôle du second ouvrant vient recouvrir la partie 6a du hayon 6 à l'avant et au-dessus de l'ouverture de vitre arrière 7. De préférence, le dispositif de verrouillage 12 du second ouvrant 8 est fixé sur le hayon 6, en dessous du bord inférieur de l'ouverture de vitre 7. Sur le bord arrière de la vitre 8a est fixée une patte de verrouillage destinée à coopérer avec le dispositif de verrouillage 12. Un joint d'étanchéité qui est fixé suivant le bord de l'ouverture de vitre arrière 7 permet d'assurer une fermeture totalement étanche de l'ouverture arrière lorsque la vitre 8a est en position rabattue et verrouillée sur le hayon 6.

La carrosserie 2 comporte de part et d'autre de l'ouverture arrière 10, suivant les côtés latéraux du véhicule automobile, deux bords relevés 2a délimitant latéralement la partie arrière 4a du pavillon 4 et une zone d'appui du hayon 6 en position de fermeture, avec interposition d'un joint d'étanchéité du hayon.

Le dispositif de rappel et de maintien de la porte arrière 3 est constitué, sur chacun des côtés latéraux du véhicule, par un premier vérin à gaz 14a de rappel et de maintien du hayon 6 constituant le premier ouvrant et par un second vérin à gaz 14b de rappel et de maintien du second ouvrant 8.

Comme il est visible en particulier sur la figure 4, sur chacun des bords relevés latéraux 2a, dans leur partie supérieure, sont fixées une première et une seconde rotules 13a, 13b pour le montage articulé, respectivement, du corps du premier vérin à gaz 14a et du corps du second vérin à gaz 14b dans chacun desquels est montée mobile, dans une direction axiale d'actionnement respective 15a et 15b, une tige de vérin respective 14'a, 14'b assurant le rappel et le maintien, respectivement, du hayon 6 et du second ouvrant 8 comportant la vitre 8a, dans leur position d'ouverture, comme représenté sur la figure 2.

Les rotules 13a de fixation des premiers vérins 14a sur les bords latéraux 2a de la carrosserie 2 sont fixées en saillie vers l'intérieur, chacune par rapport au bord correspondant 2a de la carrosserie 2, par l'intermédiaire d'une patte de fixation. Les rotules 13b de fixation du second vérin 14b de rappel et de maintien du second ouvrant 8 sont fixées en saillie, directement sur le bord 2a correspondant de la carrosserie 2. Les rotules 13a de montage articulé des vérins 14a montées sur des pattes de fixation sont disposées en saillie vers l'intérieur sur une plus grande longueur que les rotules 13b de montage des seconds vérins 14b et sont donc décalés latéralement vers l'intérieur par rapport aux rotules 13b de montage articulé des vérins 14b.

Les corps des vérins 14a et 14b sont engagés sur les rotules correspondantes et les tiges des vérins 14'a, 14'b sont fixées également de manière rotulante sur une partie latérale respective du hayon 6 et de la partie 8b du second ouvrant 8.

En position d'ouverture complète de la porte arrière 3, les axes d'actionnement 15a, 15b des vérins de rappel et de maintien 14a et 14b sont inclinés dans des sens différents par rapport à la direction verticale, de manière à assurer un maintien efficace du premier et du second ouvrant tout en étant écartés l'un de l'autre de manière à ne pouvoir interférer.

Les articulations de montage rotulant des corps des vérins 14a et 14b sont situées dans des plans longitudinaux du véhicule automobile espacés l'un de l'autre dans la direction transversale. Les points d'attache des tiges des vérins 14a et 14b sur le premier et sur le second ouvrants, respectivement, sont, en revanche, pratiquement dans un même plan longitudinal pour assurer une fixation latérale satisfaisante du premier et du second ouvrants.

Dans la position rabattue des vérins 14a et 14b, comme représenté sur les figures 1 et 4, le vérin 14b est disposé verticalement au dessus du vérin 14a et les directions axiales d'actionnement 15a, 15b des deux vérins 14a et 14b sont dans des dispositions angulaires relatives aussi bien en projection dans un plan vertical (figure 1) que dans un plan horizontal (figure 4).

Pendant le déplacement du premier et du second ouvrants entre leurs positions de fermeture et d'ouverture, les axes d'actionnement respectifs 15a et 15b du premier et du second vérins 14a et 14b se déplacent en rotation, sensiblement dans des plans longitudinaux du véhicule, c'est-à-dire dans des plans verticaux parallèles à la direction longitudinale du véhicule automobile.

Ces plans ou plans de rotation des axes d'actionnement des vérins 14a et 14b entre leur position d'ouverture (figure 2) et leur position de fermeture (figure 1) sont des plans sensiblement longitudinaux faisant entre eux un angle faible, de telle sorte que les vérins ne peuvent interférer, ce qui gênerait le déplacement et la mise en place des corps de vérins, au cours de l'ouverture et de la fermeture des ouvrants et dans les positions d'ouverture et de fermeture. En outre, les vérins permettent d'obtenir une parfaite stabilité des ouvrants en position d'ouverture, du fait qu'à chacun des ouvrants sont associés deux vérins de rappel et de maintien disposés de part et d'autre de l'ouvrant sur les côtés latéraux du véhicule automobile. Dans leur position repliée correspondant à la position de fermeture des ouvrants, les deux vérins sont logés dans des logements 16 ménagés le long des bords latéraux relevés 2a dans des parties latérales de la carrosserie entourant l'ouverture 10 comportant en particulier la partie d'extrémité arrière 4a du toit ouvrant 4. Comme il est visible sur la figure 3, l'un au moins des vérins (14a) est disposé, dans sa position repliée, entièrement à l'intérieur du logement 16.

Pendant le déplacement de fermeture, les vérins 14a et 14b se déplacent en rotation dans des plans sensiblement longitudinaux faisant entre eux un angle aigu faible, et les tiges des vérins 14'a, 14'b se rétractent à l'intérieur des corps de vérins 14a, 14b dans les directions d'actionnement 15a, 15b pour venir dans la position de fermeture complète telle que représentée sur la figure 1, les vérins étant disposés l'un au-dessus de l'autre et dans des plans sensiblement longitudinaux, décalés latéralement et angulairement, comme représenté sur la figure 4.

Il est possible de réaliser l'ouverture de l'ensemble de la porte arrière 3 depuis la position de fermeture de la figure 1 jusqu'à la position d'ouverture de la figure 2, le premier ouvrant, c'est-à-dire le hayon 6, et le second ouvrant 8 se déplaçant par pivotement autour de l'axe 5 de manière simultanée et les vérins 14a et 14b se déplaçant en rotation dans leurs plans de rotation sensiblement longitudinaux décalés angulairement.

Comme il est visible sur les figures 1 et 2, aussi bien dans la position de fermeture de la porte arrière 3 que dans la position d'ouverture complète, les directions axiales d'actionnement 15a et 15b des vérins 14a et 14b font, à l'intérieur des plans de rotation décalés angulairement, un angle différent avec la verticale. Dans la position fermée de la porte 3 (figure 1), le vérin 14b est sensiblement horizontal et le vérin 14a est incliné vers le bas et vers l'arrière du véhicule automobile. Comme il est visible sur la figure 4, le vérin 14b se trouve au-dessus du vérin 14a. Pendant l'ouverture de la porte arrière pour passer de la position représentée sur la figure 1 à la position représentée sur la figure 2, les vérins tournent autour de leur articulation rotulante 13a ou 13b et les tiges de vérins 14'a et 14'b se déplacent dans le sens de l'extraction par rapport au corps de vérin correspondant. Dans la position ouverte représentée sur la figure 2, les tiges de vérin sont totalement extraites.

Après déverrouillage de la porte arrière 3, les vérins à gaz 14a et 14b dont le gaz (par exemple de l'air) est comprimé assurent par effet de ressort dû au gaz comprimé, une assistance à l'ouverture de la porte 3. Dans la position totalement ouverte (figure 2), les vérins assurent le maintien de la porte arrière 3 en position ouverte.

Lors de la fermeture de la porte 3, les tiges de vérins 14'a, 14'b sont rétractées à l'intérieur des corps de vérins et assurent la compression du gaz dans la chambre du vérin. Le verrouillage de la porte arrière permet de la maintenir à l'état fermé.

Lorsqu'on réalise l'ouverture du second ouvrant seul, comme représenté sur la figure 3, par actionnement du bouton de verrouillage 12, les vérins 14b assurent le rappel du second ouvrant 8 dans sa position d'ouverture telle que représentée sur la figure 3. Les vérins 14b tournent autour de leur articulation 13b, de sorte que leur axe d'actionnement 15b se déplace sensiblement dans un plan longitudinal, la tige de vérin 14'b passant de sa position rétractée à sa position totalement extraite. Pour l'ouverture du second ouvrant, seuls les seconds vérins du dispositif de rappel et de maintien se déplacent. Lors de ce déplacement en rotation des seconds vérins 14b, les axes d'actionnement 15b des seconds vérins se déplacent dans des plans sensiblement longitudinaux du véhicule automobile faisant un angle aigu avec les plans longitudinaux correspondants dans lesquels sont situés les axes d'actionnement des premiers vérins 14a. Il n'existe donc pas de risque d'interférence entre les vérins 14a et les vérins 14b pendant l'ouverture du second ouvrant.

La fermeture du second ouvrant est réalisée en rabattant celui-ci puis en le verrouillant à l'aide du bouton de verrouillage 12. Les tiges 14'b des vérins 14b se déplacent vers une position totalement rétractée à l'intérieur du corps de vérin correspondant et assurent une compression du gaz du vérin.

Le dispositif de rappel et de maintien du véhicule automobile suivant l'invention assure donc le rappel et le maintien de l'ensemble de la porte arrière ou du second ouvrant.

Les paires de vérins 14a, 14b du dispositif de rappel et de maintien disposées sur les côtés latéraux du véhicule automobile peuvent se déplacer simultanément ou les seconds vérins 14b peuvent se déplacer indépendamment des premiers vérins 14a, sans risque d'interférence.

## Revendications

1. Véhicule automobile (1) comprenant une carrosserie (2) munie d'un pavillon (4) et d'une porte arrière (3) comportant un premier et un second ouvrants (6, 8) mobiles par pivotement autour d'un axe horizontal (5) transversal au niveau du pavillon (4) du véhicule automobile (1) et équipée d'un dispositif de rappel et de maintien, le premier ouvrant (6) étant mobile entre une position d'ouverture et une position de fermeture d'une ouverture arrière (10) de la carrosserie du véhicule automobile (1) et le second ouvrant (8) entre une position rabattue sur le premier ouvrant (6) et une position ouverte éloignée du premier ouvrant (6), le dispositif de rappel et de maintien comportant, sur chacun des côtés latéraux du véhicule automobile (1), un premier et un second vérins à gaz (14a, 14b), le premier vérin (14a) étant monté articulé par une partie de corps de vérin sur la carrosserie (2) du véhicule automobile et par une partie de tige de vérin (14'a) montée mobile par coulissement dans le corps de vérin, sur une partie latérale du premier ouvrant (6), le second vérin à gaz (14b) étant monté articulé par une partie de corps de second vérin sur la carrosserie (2) du véhicule automobile (1), dans une position décalée latéralement dans la direction transversale du véhicule automobile par rapport à la position d'articulation du corps du premier vérin sur la carrosserie (2) et par une partie de tige de second vérin (14'b), sur une partie latérale du second ouvrant (8), de manière que les axes longitudinaux d'actionnement (15a, 15b) du premier et du second vérins (14a, 14b) se déplacent, au cours du déplacement des ouvrants (6, 8), sensiblement dans un premier et dans un second plans sensiblement longitudinaux du véhicule automobile ayant une disposition angulaire l'un par rapport à l'autre, l'un au moins du premier et du second vérins (14a, 14b) étant disposé dans un logement (16) ménagé dans le côté latéral de la carrosserie (2) du véhicule automobile, dans une position repliée.

2. Véhicule automobile suivant la revendication 1, **caractérisé par le fait que** le premier et le second vérins (14a, 14b) comportent chacun un corps de vérin monté articulé par l'intermédiaire d'une rotule sphérique respective (13a, 13b) sur la carrosserie (2) du véhicule automobile, et une tige de vérin (14'a, 14'b) montée articulée par l'intermédiaire d'une articulation sphérique, respectivement sur une partie latérale du premier ouvrant (6) et une partie latérale du second ouvrant (8).

3. Véhicule automobile suivant la revendication 2, **caractérisé par le fait que** la première rotule de fixation (13a) du premier vérin (14a) et la seconde rotule de fixation (13b) du second vérin (14b) d'une paire de vérins (14a, 14b) disposée sur un côté latéral de la carrosserie (2) du véhicule automobile (1) sont montées en saillie dans la direction transversale vers l'intérieur sur un rebord latéral (2a) de la carrosserie (2) du véhicule automobile (1), la rotule (13a) de montage du corps du premier vérin (14a) dont la tige est reliée au premier ouvrant (6) étant en saillie dans la direction transversale vers l'intérieur du véhicule sur une longueur plus grande que la seconde rotule (13b) de montage articulé du second vérin (14b) dont la tige (14'b) est reliée au second ouvrant (8).

4. Véhicule automobile suivant la revendication 3, **caractérisé par le fait que** la tige (14'a) du premier vérin (14a) et la tige (14'b) du second vérin (14b) sont reliées, respectivement, au premier ouvrant (6) et au second ouvrant (8) dans des positions telles qu'en position repliée de fermeture, le second vérin (14b) se trouve au-dessus du premier vérin (14a).

5. Véhicule automobile suivant l'une quelconque des revendications 1 à 4, **caractérisé par le fait que** chacun des premiers vérins (14a) et des seconds vérins (14b) du dispositif est disposé dans la position déployée d'ouverture du premier ouvrant (6) et du second ouvrant (8) de manière angulaire par rapport à une direction verticale, la direction axiale d'actionnement (15a) du premier vérin (14a) et la direction axiale d'actionnement (15b) du second vérin (14b) de chaque paire de vérins étant inclinées en sens inverse par rapport à la direction verticale.

## Claims

1. Automobile (1) comprising a bodyshell (2) fitted with a roof (4) and a rear door (3), comprising a first and a second opening element (6, 8) mobile by pivoting about a transverse horizontal axis (5) at the roof (4) of the automobile (1) and fitted with a return and support device, the first opening element (6) being mobile between an open position and a closed position of a rear opening (10) of the bodyshell of the automobile (1), and the second opening element (8) being mobile between a position lowered onto the first opening element (6) and an open position distant from the first opening element (6), the return and support device comprising, on each lateral side of the automobile (1), a first and a second gas strut (14a, 14b), the first strut (14a) being mounted hinged via part of the strut body on the bodyshell (2) of the automobile and via part of the strut rod (14'a), mounted mobile sliding in the strut body, on a side part of the first opening element (6), the second gas strut (14b) being mounted hinged via part of the second strut body on the bodyshell (2) of the automobile (1) in a position laterally offset in the transverse direction of the automobile in relation to the hinge position of the first strut body on the bodyshell (2), and via part of the second strut rod (14'b) on a side part of the second opening element (8) such that the longitudinal actuation axes (15a, 15b) of the first and second struts (14a, 14b) move, during movement of the opening elements (6, 8), substantially in a first and a second substantially longitudinal plane of the automobile having an angular relationship to each other, at least one of the first and second struts (14a, 14b) being arranged in a housing (16) provided in the lateral side of the bodyshell (2) of the automobile, in the retracted position.

2. Automobile according to claim 1, **characterised in that** the first and second struts (14a, 14b) each comprise a strut body mounted hinged via a respective spherical pivot (13a, 13b) on the bodyshell (2) of the automobile, and a strut rod (14'a, 14'b) mounted hinged via a spherical joint, on a side part of the first opening element (6) and a side part of the second opening element (8) respectively.

3. Automobile according to claim 2, **characterised in that** the first fixing pivot (13a) of the first strut (14a) and the second fixing pivot (13b) of the second strut (14b) of a strut pair (14a, 14b) arranged on a lateral side of the bodyshell (2) of the automobile (1) are mounted protruding in the transverse direction towards the interior on a lateral shoulder (2a) of the bodyshell (2) of the automobile (1), the mounting pivot (13a) of the first strut body (14a), the rod of which is linked to the first opening element (6), protruding in the transverse direction towards the interior of the vehicle over a greater length than the second hinged mounting pivot (13b) of the second strut (14b), the rod (14'b) of which is linked to the second opening element (8).

4. Automobile according to claim 3, **characterised in that** the rod (14'a) of the first strut (14a) and the rod (14'b) of the second strut (14b) are linked respectively to the first opening element (6) and the second opening element (8) in positions such that, in the retracted closed position, the second strut (14b) is above the first strut (14a).

5. Automobile according to any of claims 1 to 4, **characterised in that** each of the first struts (14a) and second struts (14b) of the device is arranged, in the deployed open position of the first opening element (6) and the second opening element (8), in an angular manner in relation to the vertical direction, the axial actuation direction (15a) of the first strut (14a) and the axial actuation direction (15b) of the second strut (14b) of each strut pair being inclined in the opposite direction in relation to the vertical direction.

## Patentansprüche

1. Kraftfahrzeug (1), umfassend eine Karosserie (2), die mit einem Dach (4) und mit einer Hecktür (3) versehen ist, die einen ersten und einen zweiten Flügel (6, 8) umfasst, die durch Verschwenken um eine horizontale Querachse (5) auf Höhe des Dachs (4) des Kraftfahrzeugs (1) beweglich sind, und mit einer Rückhol- und Haltevorrichtung ausgerüstet ist, wobei der erste Flügel (6) zwischen einer Stellung der Öffnung und einer Stellung der Schließung einer Hecköffnung (10) der Karosserie des Kraftfahrzeugs (1) und der zweite Flügel (8) zwischen einer auf den ersten Flügel (6) heruntergeklappten Stellung und einer von dem ersten Flügel (6) entfernten offenen Stellung beweglich ist, wobei die Rückhol- und Haltevorrichtung auf jeder der Seiten des Kraftfahrzeugs (1) eine erste und eine zweite Gasdruckfeder (14a, 14b) umfasst, wobei die erste Gasdruckfeder (14a) über einen Gasdruckfeder-Körperteil an der Karosserie (2) des Kraftfahrzeugs und über einen Gasdruckfeder-Stangenteil (14'a), der in dem Gasdruckfeder-Körper durch Gleiten beweglich montiert ist, an einem seitlichen Teil des ersten Flügels (6) angelenkt ist, wobei die zweite Gasdruckfeder (14b) über einen Körperteil der zweiten Gasdruckfeder an der Karosserie (2) des Kraftfahrzeugs (1) in einer Stellung, die in der Querrichtung des Kraftfahrzeugs bezüglich der Stellung der Anlenkung des Körpers der ersten Feder an der Karosserie (2) seitlich versetzt ist, und über einen Stangenteil der zweiten Gasdruckfeder (14'b) an einem seitlichen Teil des zweiten Flügels (8) angelenkt ist, so dass die Betätigungslängsachsen (15a, 15b) der ersten und der zweiten Gasdruckfeder (14a, 14b) sich während der Bewegung der Flügel (6, 8) im Wesentlichen in einer ersten und in einer zweiten im Wesentlichen longitudinalen Ebene des Kraftfahrzeugs bewegen, die zueinander in einem Winkel angeordnet sind, wobei mindestens einer der ersten und der zweiten Gasdruckfedern (14a, 14b) in einer zusammengeklappten Stellung in einer in der Seite der Karosserie (2) des Kraftfahrzeugs vorgesehenen Aussparung (16) angeordnet ist.

2. Kraftfahrzeug nach Anspruch 1, **dadurch gekennzeichnet, dass** die erste und die zweite Gasdruckfeder (14a, 14b) jeweils einen Gasdruckfeder-Körper, der jeweils über ein Kugelgelenk (13a, 13b) an der Karosserie (2) des Kraftfahrzeugs angelenkt ist, und eine Gasdruckfeder-Stange (14'a, 14'b) umfasst, die über ein Kugelgelenk an einem Seitenteil des ersten Flügels (6) bzw. an einem Seitenteil des zweiten Flügels (8) angelenkt ist.

3. Kraftfahrzeug nach Anspruch 2, **dadurch gekennzeichnet, dass** das erste Befestigungskugelgelenk (13a) der ersten Gasdruckfeder (14a) und das zweite Befestigungskugelgelenk (13B) der zweiten Gasdruckfeder (14b) eines Paars von Gasdruckfedern (14a, 14b), das auf einer Seite der Karosserie (2) des Kraftfahrzeugs (1) angeordnet ist, in der Querrichtung nach innen vorstehend auf einem Seitenrand (2a) der Karosserie (2) des Kraftfahrzeugs (1) montiert sind, wobei das Montagekugelgelenk (13a) des Körpers der ersten Gasdruckfeder (14a), deren Stange mit dem ersten Flügel (6) verbunden ist, in der Querrichtung auf das Innere des Fahrzeugs zu auf einer größeren Länge als das zweite Montagekugelgelenk (13b) der zweiten Gasdruckfeder (14b) vorsteht, deren Stange (14'b) mit dem zweiten Flügel (8) verbunden ist.

4. Kraftfahrzeug nach Anspruch 3, **dadurch gekennzeichnet, dass** die Stange (14'a) der ersten Gasdruckfeder (14a) und die Stange (14'b) der zweiten Gasdruckfeder (14b) mit dem ersten Flügel (6) bzw. mit dem zweiten Flügel (8) in solchen Stellungen verbunden sind, dass sich die zweite Gasdruckfeder (14b) in zusammengeklappter Verschlussstellung über der ersten Gasdruckfeder (14a) befindet.

5. Kraftfahrzeug nach einem der Ansprüche 1 bis 4, **dadurch gekennzeichnet, dass** jede der ersten Gasdruckfedern (14a) und der zweiten Gasdruckfedern (14b) der Vorrichtung in der ausgefahrenen Stellung der Öffnung des ersten Flügels (6) und des zweiten Flügels (8) bezüglich einer vertikalen Richtung in einem Winkel angeordnet ist, wobei die axiale Betätigungsrichtung (15a) der ersten Gasdruckfeder (14a) und die axiale Betätigungsrichtung (15b) der zweiten Gasdruckfeder (14b) jedes Federpaares im entgegengesetzten Sinn bezüglich der vertikalen Richtung geneigt sind.
